# EUROPÄISCHE PATENTSCHRIFT

(11) **EP 0 985 562 B1**
(45) Veröffentlichungstag und Bekanntmachung des Hinweises auf die Patenterteilung: **06.10.2004**
(21) Anmeldenummer: 99114411.4
(22) Anmeldetag: 22.07.1999
(51) Int. Cl.: B60C 29/02, B60B 21/00

(54) **Fahrzeugrad**
Vehicle wheel
Roue de véhicule

(30) Priorität: 11.09.1998 DE 29816358 U
(43) Veröffentlichungstag der Anmeldung: 15.03.2000
(73) Patentinhaber: Dr.Ing. h.c.F. Porsche Aktiengesellschaft, 70435 Stuttgart (DE)
(72) Erfinder: Kugelmann, Gregor, 71229 Leonberg (DE); Stach, Jens, 71296 Heimsheim (DE)

(56) Entgegenhaltungen:
- EP-A- 0 032 747
- DE-A- 19 624 800
- US-A- 5 641 208
- US-A- 5 741 103

## Beschreibung

Die Erfindung bezieht sich auf ein Fahrzeugrad, insbesondere auf ein zweiteiliges Fahrzeugrad, mit einem eingesetzten Ventilkörper nach dem Oberbegriff des Anspruchs 1.

Aus der EP 0 032 747 A1 ist ein einteiliges Fahrzeugrad mit einem Ventil in einer Felgenschulter bekannt. Zur Abdichtung dieses Ventils gegenüber dem Reifeninnenraum ist innenseitig am Bund des Ventilkörpers ein O-Dichtring vorgesehen und von außen her wird eine Mutter auf den Ventilkörper geschraubt, die teilweise in eine Bohrung der Felgenschulter hineinragt.

Aufgabe der Erfindung ist es, bei einem zweiteiligen Fahrzeugrad mit einem Hohlraum zwischen den Felgenschultern ein Ventil abgedichtet einzusetzen.

Diese Aufgabe wird erfindungsgemäß durch die Merkmale des Anpruchs 1 gelöst. Weitere vorteilhafte Merkmale beinhalten die Unteransprüche.

Die mit der Erfindung hauptsächlich erzielten Vorteile bestehen darin, daß bei einem zweiteiligen Rad, welches zwischen den Felgenschultern jedes Radteiles einen Hohlraum aufweist, der umlaufend einen Ringraum zwischen den Felgenschultern bildet, ein Ventil derart einzusetzen, daß sowohl der Ventilkörper zum Innenraum des Reifens als auch zum Hohlraum gesichert abgedichtet ist.

Dies wird erfindungsgemäß durch eine auf den Ventilkörper angeordnete Dichthülse erzielt. Diese ist in der jeweiligen Bohrung des Felgenhorns von der Felge und vom Felgenstern eingepreßt, eingeklemmt oder dergleichen gehalten.

Insbesondere ist die Hülse in der Bohrung der Felge zwischen dem Ventilkörper und der Bohrung eingeklemmt, wobei ein gegenüberliegendes freies Ende der elastischen Dichtungshülse den Ventilkörper dicht umfaßt. Mittels einer Ringnut in der Dichtungshülse, ist diese in der Bohrung der Felgenschulter des Felgensterns gehalten.

Nach einer weiteren Ausführungsform der Erfindung, insbesondere bei einem Stahlventil, kann die Abdichtung von der Außenseite der Felgenschulter her am Felgenstern mittels eines elastischen Dichtringes erfolgen. Dieser wird über eine auf dem Ventilkörper aufschraubbaren Spannhülse in einer Absetzung der Bohrung in der Felgenschulter des Felgensterns gehalten.

Ausführungsbeispiele der Erfindung sind in den Zeichnungen dargestellt und werden im folgenden näher beschrieben.

Es zeigen
- Fig. 1: eine Schnittdarstellung eines in einer Felgenschulter eines zweiteiligen Rades eingesetzten Ventils mit Dichtungshülse und
- Fig. 2: eine Schnittdarstellung eines in einer Felgenschulter eines zweiteiligen Rades eingesetzten Ventils über eine Dichtungsscheibe und einer Spannhülse.

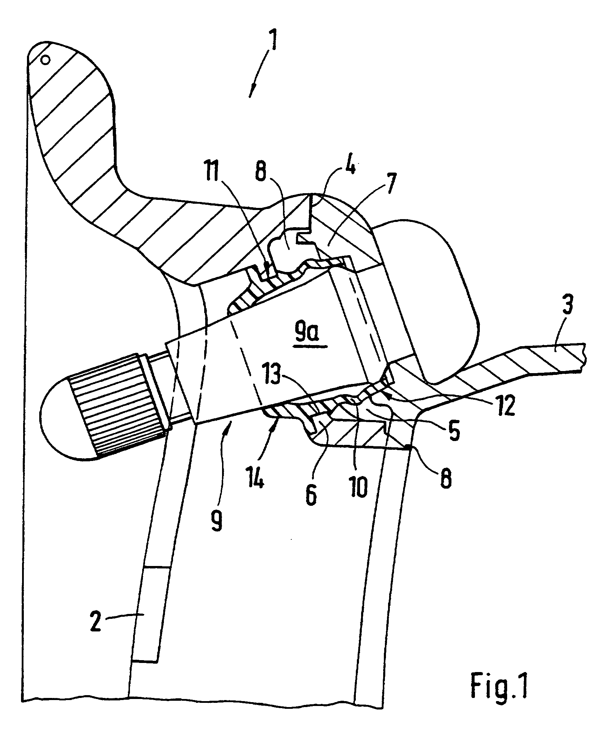

Nach einem ersten Ausführungsbeispiel gemäß Fig. 1 besteht das Rad 1, von dem nur ein Randbereich dargestellt ist, aus einem Felgenstern 2 und einer Felge 3. Diese beiden Radteile 2 und 3 werden miteinander mindestens im Bereich 4 und 5 verbunden. Die Felgenschultern 6 und 7 des Radsterns 2 und der Felge 3 bilden zwischen sich einen Hohlraum 8, der als Ringraum ausgeführt sein kann.

Das Ventil 9 bzw. der Ventilkörper 9a ist unter Zwischenschaltung einer elastischen Dichtungshülse 10 in Bohrungen 11, 12 der Felgenschultern 6, 7 eingesetzt. In der Felgenschulter 7 ist die Dichtungshülse 10 zwischen der Bohrung 12 und dem Ventilkörper 9a eingeklemmt. Über eine Ringnut 13 der Hülse 10 wird diese in der Bohrung 11 des Felgensterns 2 gehalten. Das wegragende freie Ende 14 der Dichtungshülse 10 legt sich dichtend um den Ventilkörper 9a.

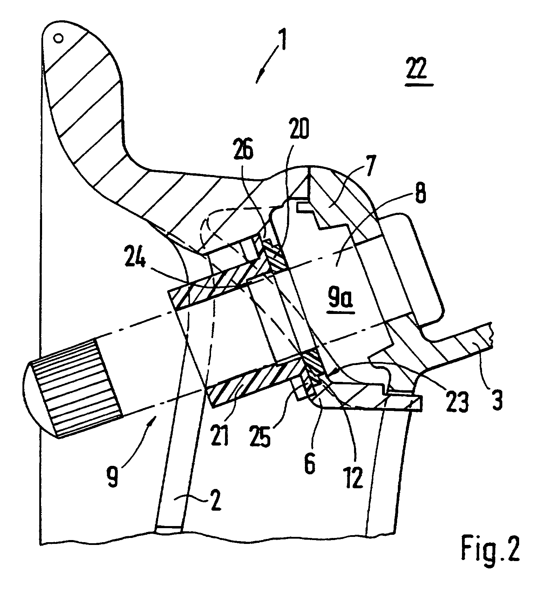

Nach einer weiteren Ausführungsform gemäß Fig. 2 ist bei einem zweiteiligen Rad 1 das Ventil 9 bzw. der Ventilkörper 9a mittels einer Dichtungsscheibe 20 und einer Spannhülse 21 zum Hohlraum 8 und zum Reifeninnenraum 22 hin abgedichtet.

Die Dichtungsscheibe 20 ist in einer Absetzung 23 der Bohrung 12 in der Felgenschulter 6 des Felgensterns 2 gehalten. Von außen her wird die Spannhülse 21 gegen die Dichtungsscheibe 20 gespannt, wozu auf dem Ventilkörper 9a ein Gewinde 24 vorgesehen sein kann.

Ein Bund 25 der Spannhülse 21 preßt sich gegen den Dichtungsring 21 und gegen einen Absatz 26 der Felgenschulter 6 und bewirkt somit eine Abdichtung des Ventilkörpers 9a zum Hohlraum 8 und zum Reifeninnenraum 22 hin.

## Patentansprüche

1. Fahrzeugrad, insbesondere zweiteiliges Fahrzeugrad mit einem eingesetzten Ventilkörper, der mittels eines Dichtelements in einer Felgenschulter des Rades gehalten ist, **dadurch gekennzeichnet, daß** in den einen Hohlraum (8) zwischen sich aufweisenden Felgenschultern (6, 7) des Felgensterns (2) und der Felge (3) der Ventilkörper (9a) des Ventils (9) unter Zwischenschaltung eines Dichtteils (10; 20) angeordnet ist, welches den Ventilkörper (9a) abdichtend zum Hohlraum (8) sowie zum Reifeninnenraum (22) des Rades (1) hält.

2. Fahrzeugrad nach Anspruch 1, **dadurch gekennzeichnet, daß** das Dichtteil (10) aus einem elastischen Hülsenelement besteht, welches einerseits zwischen dem Ventilkörper (9a) und einer Bohrung (12) in der Felgenschulter (7) der Felge (3) und andererseits zwischen dem Ventilkörper (9a) und einer Bohrung (11) im Radstern (2) angeordnet ist.

3. Fahrzeugrad nach den Ansprüchen 1 oder 2, **dadurch gekennzeichnet, daß** das elastische Hülsenelement (10) in der Bohrung (11) des Felgensterns (2) über eine Ringnut (13) gehalten ist und sich ein wegragendes freies Ende (14) des Hülsenelements (10) am Ventilkörper (9a) dichtend anliegt.

4. Fahrzeugrad nach den Ansprüchen 1 oder 2, **dadurch gekennzeichnet, daß** das Dichtteil (20) aus einem in der Bohrung (12) des Felgensterns (2) angeordneten Dichtungsscheibe sowie einer von außen gegenspannbaren Hülse (21) besteht, die auf den Ventilkörper (9a) aufschraubbar ist.

5. Fahrzeugrad nach den Ansprüchen 1 oder 4, **dadurch gekennzeichnet, daß** die Dichtungsscheibe (20) in einer Absetzung (23) der Bohrung (12) gehalten ist und sich ein Bund (25) der Spannhülse (21) gegen die Dichtungsscheibe (20) anlegt und sich an einem Absatz (26) der Felgenschulter (6) abstützt.

## Claims

1. A vehicle wheel, in particular a two-part vehicle wheel with an inserted valve body which is held in a bead seat of the wheel by means of a sealing element, **characterized in that** the body (9a) of the valve (9) is arranged in the bead seats (6, 7) - having a cavity (8) between themselves - of the rim spider (2) and the rim (3) with the interposition of a sealing part (10; 20) which holds the valve body (9a) in a sealed manner with respect to the cavity (8) and with respect to the tyre interior (22) of the wheel (1).

2. A vehicle wheel according to Claim 1, **characterized in that** the sealing part (10) comprises a resilient sleeve element which is arranged at one end in the bead set (7) of the rim (3) between the valve body (9a) and a bore (12) and at the other end in the wheel spider (2) between the valve body (9a) and a bore (11).

3. A vehicle wheel according to Claims 1 or 2, **characterized in that** the resilient sleeve element (10) is held in the bore (11) in the rim spider (2) by way of an annular groove (13), and a projecting free end (14) of the sleeve element (10) rests on the valve body (9a) in a sealed manner.

4. A vehicle wheel according to Claims 1 or 2, **characterized in that** the sealing part (20) comprises a sealing washer arranged in the bore (12) in the rim spider (2) as well as a sleeve (21) which can be counter-clamped from outside and which can be screwed onto the valve body (9a).

5. A vehicle wheel according to Claims 1 or 4, **characterized in that** the sealing washer (20) is held in an offset (23) of the bore (12), and a collar (25) of the clamping sleeve (21) rests against the sealing washer (20) and is supported on a step (26) of the bead seat (6).

## Revendications

1. Roue de véhicule, en particulier roue de véhicule en deux parties avec un corps de valve inséré qui est maintenu au moyen d'un élément d'étanchéité dans un épaulement de la jante de la roue, **caractérisée en ce que** dans les épaulements de jante (6, 7) formant entre eux une cavité (8), de l'étoile de jante (2) et de la jante (3), est disposé le corps (9a) de la valve (9), avec interposition d'un élément d'étanchéité (10 ; 20) qui maintient le corps de valve (9a) de manière étanche par rapport à la cavité (8) ainsi que par rapport au volume intérieur (22) du pneu de la roue (1).

2. Roue de véhicule, selon la revendication 1, **caractérisée en ce que** l'élément d'étanchéité (10) est constitué d'un élément de manchon élastique qui est disposé d'une part, entre le corps de valve (9a) et un trou (12) pratiqué dans l'épaulement (7) de la jambe (3) et d'autre part, entre le corps de valve (9a) et un trou (11) pratiqué dans l'étoile de roue (2).

3. Roue de véhicule selon les revendications 1 ou 2, **caractérisée en ce que** l'élément de manchon élastique (10) est maintenu dans le trou (11) de l'étoile de jante (2) par une rainure annulaire (13), et une extrémité libre (14) dépassante de l'élément de manchon (10) s'applique de manière étanche contre le corps de valve (9a).

4. Roue de véhicule selon les revendications 1 ou 2, **caractérisée en ce que** l'élément d'étanchéité (20) est constitué d'une rondelle d'étanchéité disposée dans le trou (12) de l'étoile de jante (2), ainsi que d'un manchon (21) pouvant être contre-serré de l'extérieur, qui peut être vissé sur le corps de valve (9a).

5. Roue de véhicule selon les revendications 1 ou 4, **caractérisée en ce que** la rondelle d'étanchéité (20) est maintenue dans une partie en retrait (23) du trou (12) et un épaulement (25) du manchon de serrage (21) s'applique contre la rondelle d'étanchéité (20) et prend appui contre un talon (26) de l'épaulement de jante (6).
